# FASCICULE DE BREVET EUROPEEN

(11) **EP 3 077 342 B1**
(45) Date de publication et mention de la délivrance du brevet: **18.04.2018**
(21) Numéro de dépôt: 14821760.7
(22) Date de dépôt: 01.12.2014
(51) Int. Cl.: C03C 17/30, C03C 17/32

(54) **VITRAGE À COUCHE HYDROPHILE À RÉSISTANCE À LA RAYURE AMÉLIORÉE**
VERGLASUNGSEINHEIT MIT EINER HYDROPHILEN SCHICHT MIT VERBESSERTER KRATZFESTIGKEIT
GLAZING UNIT COMPRISING A HYDROPHILIC LAYER HAVING AN IMPROVED SCRATCH RESISTANCE

(30) Priorité: 03.12.2013 FR 1361999; 17.07.2014 FR 1456851
(43) Date de publication de la demande: 12.10.2016
(73) Titulaire: Saint-Gobain Glass France, 92400 Courbevoie (FR); Université Pierre et Marie Curie, 75252 Paris Cedex 05 (FR); Centre National de la Recherche Scientifique, 75794 Paris Cedex 16 (FR)
(72) Inventeur: FOTI, Fabio, 60280 Margny-lès-Compiègne (FR); ARNAUD, Alix, F-92120 Montrouge (FR); BOUTEILLER, Laurent, F-92340 Bourg La Reine (FR); BONNET, Julien, F-44230 Saint Sébastien Sur Loire (FR)
(74) Mandataire: Saint-Gobain Recherche
(86) Numéro de dépôt international: PCT/FR2014/053093
(87) Numéro de publication internationale: WO 2015/082814

(56) Documents cités:
- WO-A1-2013/026612
- US-A- 4 467 073
- US-A1- 2004 137 155
- US-A1- 2012 201 982

## Description

La présente invention a trait à un vitrage à couche hydrophile, un procédé de fabrication de celui-ci, et son utilisation.

La visibilité à travers les vitrages de véhicules de transport peut être dégradée lorsque de la condensation se forme. Des solutions connues pour éviter ou éliminer la buée consistent à augmenter la ventilation ou à utiliser des vitrages chauffants. Pour éviter de solliciter la batterie des véhicules électriques, en particulier, une solution passive est préférable.

Le document WO 2013/026612 A1 décrit un vitrage comprenant un substrat revêtu d'une couche hydrophile contenant au moins du polyuréthane, de la polyvinylpyrrolidone et un agent filmogène. Ce vitrage retarde et limite la formation de condensation sous forme de gouttelettes affectant la visibilité. La condensation a au contraire tendance à s'y déposer sous forme d'un film uniforme d'eau n'affectant pas la visibilité.

Les rayures du vitrage, et en particulier de la couche hydrophile sont, en dehors de la condensation, l'un des principaux autres phénomènes pouvant gêner la visibilité à travers le vitrage. L'invention a donc visé à améliorer la résistance à la rayure de ce type de vitrage, et en particulier de ce type de couche hydrophile.

Cet objectif est atteint par l'invention qui, en conséquence, a pour objet un vitrage comprenant une couche hydrophile à réseau polyuréthane incorporant des fonctions bisurée selon la revendication 1. Au sens de l'invention, le terme « incorporer » signifie : par liaison covalente.

Les fonctions bisurée induisent une réticulation physique supplémentaire par liaison hydrogène entre deux atomes d'hydrogène reliés chacun à un atome d'azote par simple liaison et un atome d'oxygène d'une molécule voisine, relié à un atome de carbone par double liaison..Au sens de l'invention, un vitrage désigne une structure comprenant un substrat transparent en matériau verrier tel que verre, vitrocéramique, composé silicié tel que polysiloxane, en oxyde cristallin du type alumine (saphir)..., ou en matériau polymère transparent résistant aux températures d'élaboration de la couche hydrophile, notamment 150 °C. On peut citer un polycarbonate, un polyméthacrylate de méthyle, une résine ionomère, un polyamide, un polyester tel que poly(téréphtalate d'éthylène), une polyoléfine... Le substrat transparent peut constituer une feuille rigide, un film souple

Le vitrage de l'invention peut être monolithique, mais la couche hydrophile peut également revêtir un substrat transparent faisant partie d'un vitrage feuilleté ou multiple (double, triple...).

Selon d'autres caractéristiques préférées du vitrage de l'invention :
- la couche hydrophile contient de la polyvinylpyrrolidone ; les chaines moléculaires, par exemple essentiellement linéaires de polyvinylpyrrolidone, peuvent être enchevêtrées dans le réseau polyuréthane sans y être liées par liaison covalente, par exemple par formation de celui-ci en présence de la polyvinylpyrrolidone ;
- la couche hydrophile contient un agent filmogène, qui contient avantageusement au moins un polydiméthylsiloxane, de préférence modifié par un polyester, en particulier à fonction hydroxy ;
- la couche hydrophile contient au moins 75 à 99 % en masse de polyuréthane, 1 à 15 % en masse de polyvinylpyrrolidone, et 0,01 à 3 % en masse d'agent filmogène ;
- le poids moléculaire moyen en poids de la polyvinylpyrrolidone est de 1,1.10⁶ à 1,8.10⁶ g/mol ;
- la couche hydrophile a une épaisseur comprise entre 0,1 et 250 µm, de préférence 1 et 100 µm, et de manière particulièrement préférée 3 et 50 µm ; et
- la couche hydrophile est reliée à un substrat verrier avec interposition d'un primaire d'adhésion qui contient au moins un aminosilane (voir définition d'un matériau verrier précédemment).

L'invention a d'autre part pour objet un procédé de fabrication d'un vitrage comprenant une couche hydrophile tel que décrit précédemment, dans lequel :
a) une solution contenant au moins un isocyanate, un polyol et une bisurée à fonction polyol, de la polyvinylpyrrolidone, un agent filmogène et un solvant, est déposée sur un substrat verrier,
b) le vitrage contenant le substrat et la solution déposée est séché, et
c) soumis à une température comprise entre 100 et 150 °C.

L'isocyanate (polyisocyanate, tri- et/ou bi-isocyanate) réagit avec le polyol comme avec la fonction polyol de la bisurée, qui est ainsi incorporée dans le réseau polyuréthane.

Selon des caractéristiques préférées du procédé de l'invention :
- les fonctions hydroxy de la bisurée représentent 1 à 25, de préférence 3 à 22 % molaires des fonctions hydroxy de la totalité des polyols ;
- l'isocyanate est choisi parmi l'hexaméthylène-1,6-diisocyanate, un oligomère ou un homopolymère de celui-ci, et un diisocyanate aliphatique cyclique, seuls ou en mélange de plusieurs d'entre eux ;
- le polyol est choisi parmi les polyéthylènes glycol, polypropylène éther polyol et 1,4-butanediol, seuls ou en mélange de plusieurs d'entre eux ;
- la solution contient un catalyseur, de préférence le dilaurate de dibutylétain ;
- la solution présente un rapport molaire [NCO] /[OH] compris entre 0,7 et 1,3, de préférence 0,8 et 1,15.

Un autre objet de l'invention consiste en l'utilisation d'un vitrage comprenant une couche hydrophile tel que décrit ci-dessus, pour un véhicule de transport terrestre, aérien et aquatique, notamment pour un véhicule électrique ou autre véhicule à moteur, par exemple comme pare-brise, lunette arrière, vitrage latéral ou vitrage de toit, pour le bâtiment, l'aménagement intérieur, les miroirs, l'électroménager, le mobilier urbain, en particulier dans le but de réduire la condensation d'humidité sur le vitrage.

L'invention est maintenant illustrée par l'exemple suivant.

### EXEMPLE

### Produits chimiques

Les isocyanates utilisés dans la formulation du réseau polyuréthane ont été fournis par la société Bayer. Le Desmodur® N3200 est un isocyanate trifonctionnel de masse molaire 480g.mol⁻¹. Il est basé sur la structure biuret de l'héxaméthylène de diisocyanate. Le Desmodur W est un diisocyanate aliphatique cyclique de masse molaire 262g.mol⁻¹. Leurs formules sont représentées de manière schématique ci-dessous.

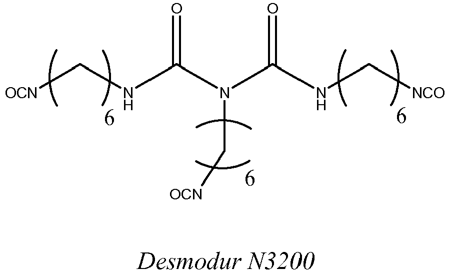

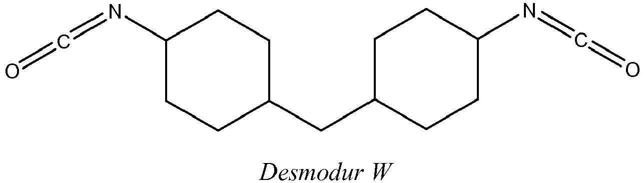

Les isocyanates ont été conservés sous atmosphère inerte. Le dosage des groupements NCO a été effectué par dosage acido-basique selon la norme NF EN ISO 14896.

Le polyol utilisé est un polyéthylène glycol (PEG) de 200g.mol⁻¹. Le PEG ainsi que le dilaurate de dibutylétain (DBTL) utilisé comme catalyseur de la réaction sont des produits commerciaux de chez Aldrich.

L'agent filmogène consistant en polydiméthylsiloxane modifié par un polyester et à fonction hydroxy, est le BYK-370 et a été fournie par la société BYK-Chemie GmbH.

La polyvinylpyrrolidone (PVP), qui joue le rôle d'agent antibuée, est distribuée par BASF sous la marque Luvitec® K90.

Enfin le solvant de la formulation, le diacétone alcool (DAA) provient de VWR.

### Synthèse des composés bis-urée

Les composés bis-urée sont des monomères comprenant deux fonctions urée, disposées autour d'un coeur aromatique et liées à des chaînes alkyles latérales. Dans le but de les incorporer au réseau polyuréthane les chaînes alkyles latérales ont été fonctionnalisées hydroxyle.

La synthèse est réalisée en une seule étape par condensation entre un diisocyanate et un amino-alcool dans le dichlorométhane, selon le schéma réactionnel suivant. 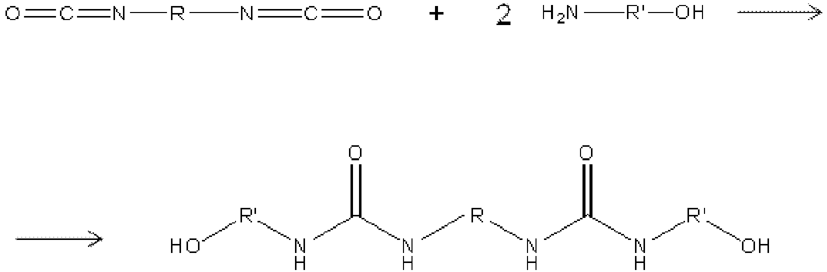 Trois monomères bis-urée ont été synthétisés à partir de toluène 2,4 diisocyanate (TDI) d'une part, de 6-amino-1-hexanol, 2-amino-1-butanol et amino-2-propanol d'autre part, tous achetés chez Aldrich. Le TDI a été conservé à 4°C dans le but d'éviter les réactions secondaires. Le dichlorométhane a été obtenu chez VWR et distillé et séché avant utilisation. Le tableau ci-dessous indique le N° attribué à chaque bis-urée dans la suite de l'exemple, les produits de départ de sa synthèse, une représentation schématique de sa formule et sa solubilité dans DAA.

**Tableau 1 - Composition des monomères bis-urées synthétisés**

| **Composé** | **Diisocyanate** | **Amino-alcool** | **Formule** | **Solubilité dans DAA (%mass)** |
|---|---|---|---|---|
| **Bis-urée1 (Bis 1)** | TDI | Amino-2-propanol | 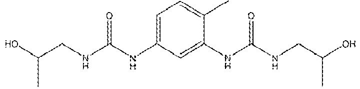 | 8 |
| | | | M=324.38g.mol⁻¹ | |
| **Bis-urée4 (Bis 4)** | TDI | 6-amino-1-hexanol | 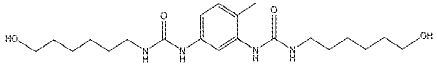 | 7.5 |
| | | | M=408.54g.mol⁻¹ | |
| **Bis-urée5 (Bis 5)** | TDI | 2-amino-1-butanol | 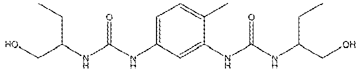 | 2.4 |
| | | | M=352.44g.mol⁻¹ | |

Une solution d'amino-alcool (0.15mol) dans 100mL de CH₂Cl₂ anhydre a été ajoutée sous azote et à 0°C à une solution de TDI (0.07mol) dans250mL de CH₂Cl₂ anhydre. Le précipité blanc obtenu a alors ensuite été filtré puis lavé avec du dichlorométhane et récupéré après évaporation du solvant sous vide prononcé. Un spectre RMN du produit final a finalement été réalisé afin de vérifier la pureté du produit.

### Formulation

En amont de la formulation, une solution mère contenant 15% massique de PVP dans le DAA a été préparée par dissolution et agitation.

Les formulations ont été préparées pour un extrait sec de 35% massique dans le solvant.

### Formulations témoins

Dans un pilulier, la solution mère est pesée puis la masse calculée de PEG est introduite à la pipette. La solution est agitée à température ambiante et la masse calculée d'isocyanate est introduite dans le mélange. L'agent filmogène (BYK-370) et le catalyseur (DBTL) sont successivement ajoutés, avec la quantité adéquate de solvant. La solution finale est agitée à température ambiante.

### Formulations avec bis-urée

Les composés bis-urées synthétisés sont dissous à température ambiante et sous agitation dans le DAA. La concentration massique en bis-urée dans le DAA dépend de la quantité molaire de bis-urée que l'on souhaite introduire dans le réseau. Les masses calculées de solution mère, PEG, isocyanate, BYK et DBTL sont respectivement ajoutées à la solution et agitées entre chaque addition.

L'épaisseur du film humide déposé sur le substrat est de 100 µm.

Les films formulés ont ensuite été entreposés dans une étuve fermée et ventilée. Le solvant a été évaporé à 50°C et l'étape de cuisson a été effectuée à 120°C. L'épaisseur du film après cuisson s'atteste à 40 µm. La composition des principales formulations explicitées est reportée dans le tableau ci-dessous.

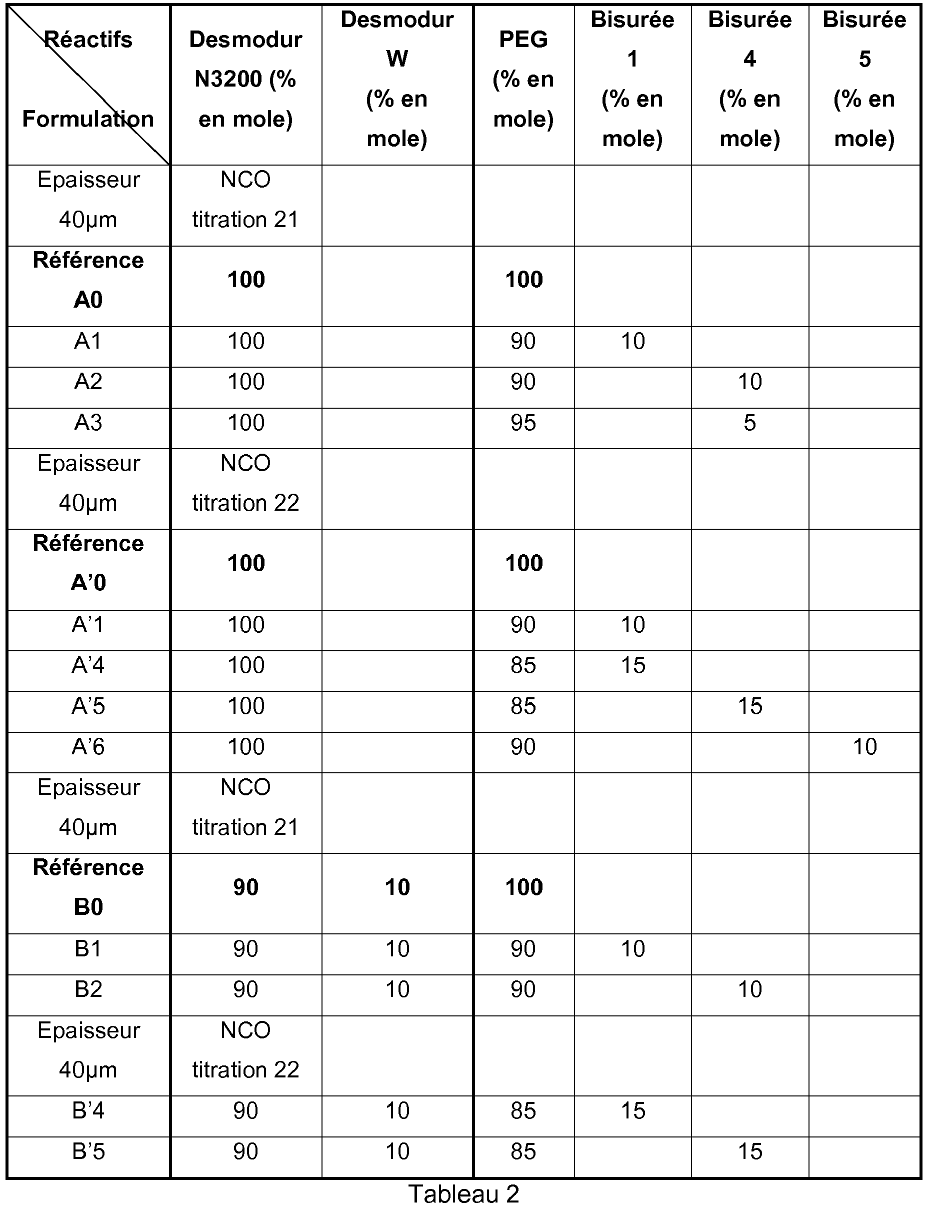

Dans tous les cas, l'épaisseur de la couche hydrophile est de 40 µm sec.

Les termes « titration 21 (ou 22) » indiquent une proportion en masse du triisocyanate et le cas échéant du diisocyanate de 21 ou 22 % dans la solution déposée.

Celle-ci contient en outre :
- 0,2 à 7 % en masse (3,5 % dans l'exemple) de polyvinylpyrrolidone, et
- 0,001 à 1,5 % en masse (0,13 % dans l'exemple) de BYK-370.

Les quantités employées de DBTL varient de 0,001 à 1 % en masse (0,01 % dans l'exemple).

Les exemples Référence signalent les formulations témoins exemptes de bisurée.

Les quantités de PEG et bisurée sont telles que la concentration en fonctions hydroxy est égale à la concentration en fonctions isocyanate.

La résistance à la rayure des couches s'avère être un paramètre primordial pour de nombreuses applications. Les tests à la rayure ont été effectués sur un Universal Scratch Test modèle 413 (Erichsen DIN53799) à l'aide d'une pointe métallique -0.75mm- de géométrie sphérique. Une charge progressive allant de 1 à 10N a été appliquée sur la couche afin d'évaluer la performance de celle-ci. La résistance à la rayure de la couche est donnée par la plus faible charge provoquant une marque visible à l'oeil nu sur le revêtement.

Deux phénomènes sont observés : l'autoréparation autonome et l'autoréparation stimulée.

Sur certains essais, des rayures apparaissent à partir d'une certaine force appliquée au test Erichsen, mais disparaissent progressivement, cependant jusqu'à une valeur maximale de cette force appliquée. Le domaine entre la force d'apparition des rayures et cette valeur maximale de disparition des rayures est celui de l'autoréparation autonome.

Sur d'autres essais, ou même dans certains cas d'autoréparation autonome, les rayures ne disparaissent que par un contact de 30 secondes avec de l'eau, évacuée par essuyage par exemple, après ces 30 secondes ; ce phénomène n'est cependant à nouveau observé que jusqu'à une certaine valeur maximale de la force appliquée au test Erichsen, définissant le domaine d'autoréparation stimulée.

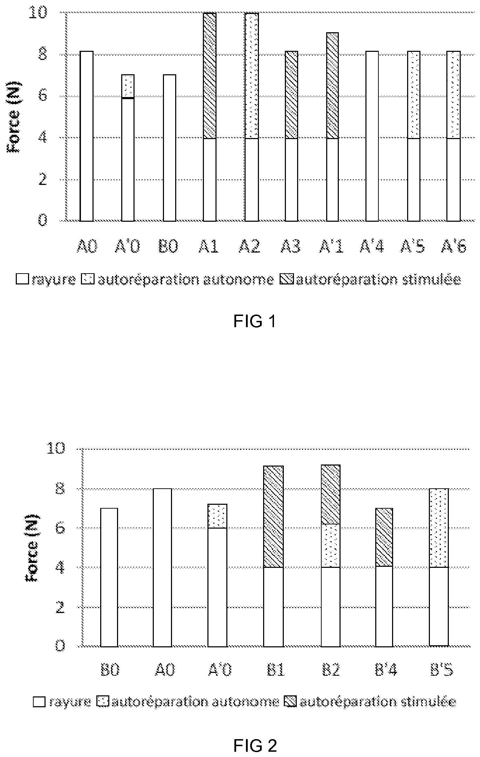

La résistance à la rayure des couches est d'abord évaluée en conditions sèches. Les résultats sont consignés sous forme d'histogramme représenté à la Figure 1 annexée. Ils concernent principalement les couches formées sans diisocyanate Desmodur W comme produit de départ.

La bisurée 1 de A1 procure une augmentation de résistance à la rayure par autoréparation stimulée (3 min environ), par rapport à A0.

La bisurée 4 de A2 procure une augmentation de la résistance à la rayure par autoréparation autonome (2 min environ), par rapport à A0.

La bisurée 5 de A'6 procure une augmentation de la résistance à la rayure par autoréparation autonome (3 min environ) par rapport à A'0.

On observe des tendances similaires entre les deux groupes de mesures « titration 21 » et « titration 22 », avec une meilleure résistance à la rayure pour le premier cité.

On évalue maintenant, toujours par test Erichsen, la résistance à la rayure en conditions humides, des couches formées en partie à partir du diisocyanate Desmodur W. Les résultats sont consignés dans l'histogramme représenté à la Figure 2.

On observe une amélioration de la résistance à la rayure quand 10 % en mole des diols sont constitués de bisurée : l'apparition de rayures se produit à une valeur inférieure de la force appliquée au test Erichsen, mais il y a autoréparation des rayures jusqu'à une valeur plus élevée de cette force que la valeur d'apparition des rayures en l'absence de bisurée.

L'utilisation de bisurée 1 dans B1 procure une autoréparation stimulée (3 min environ).

L'utilisation de bisurée 4 dans B2 procure une autoréparation autonome (plus de 2 min) puis une autoréparation stimulée.

La résistance à la rayure en conditions sèches des couches hydrophiles formées sans diisocyanate est meilleure que la résistance à la rayure en conditions humides des couches hydrophiles pour lesquelles une partie du triisocyanate a été remplacée par du diisocyanate (comparaison BO/A0, B1/A1, B2/A2, B'4/A'4, B'5/A'5).

La résistance à la rayure est à nouveau meilleure pour les essais à titration 21 que pour ceux à titration 22.

Dans une deuxième série d'essais, une partie du PEG est remplacée par le polypropylène éther polyol trifonctionnel commercialisé par la société Bayer sous la dénomination commerciale Desmophen® 1380 BT. La composition des formulations est reportée dans le tableau ci-dessous.

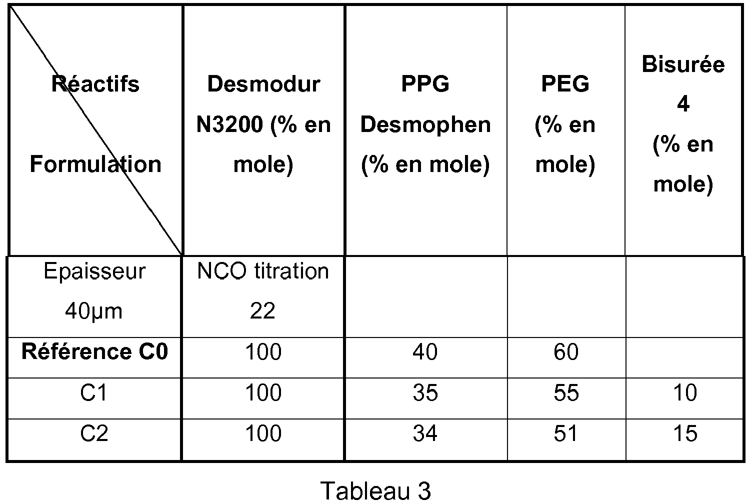

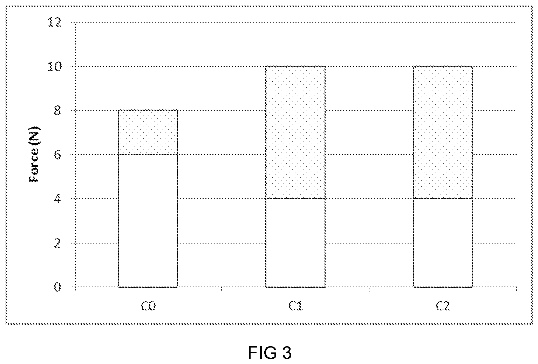

Les résultats de résistance à la rayure sont consignés à la Figure 3 en annexe. On observe à nouveau qu'une teneur en bisurée augmente la résistance à la rayure par autoréparation autonome.

## Revendications

1. Vitrage comprenant une couche hydrophile à réseau polyuréthane incorporant au moins l'un des composés bis-urée 1, respectivement bis-urée 4, respectivement bis-urée 5 obtenus à partir de toluène 2,4 diisocyanate (TDI) d'une part, d'amino-2-propanol, respectivement 6-amino-1-hexanol, respectivement 2-amino-1-butanol d'autre part.

2. Vitrage selon la revendication 1, **caractérisé en ce que** la couche hydrophile contient de la polyvinylpyrrolidone.

3. Vitrage selon l'une des revendications précédentes, **caractérisé en ce que** la couche hydrophile contient un agent filmogène.

4. Vitrage selon la revendication 3, **caractérisé en ce que** l'agent filmogène contient au moins un polydiméthylsiloxane, de préférence modifié par un polyester, en particulier à fonction hydroxy.

5. Vitrage selon la revendication 3 ou 4, **caractérisé en ce que** la couche hydrophile contient au moins 75 à 99 % en masse de polyuréthane, 1 à 15 % en masse de polyvinylpyrrolidone, et 0,01 à 3 % en masse d'agent filmogène.

6. Vitrage selon l'une des revendications 2 à 5, **caractérisé en ce que** le poids moléculaire moyen en poids de la polyvinylpyrrolidone est de 11.10⁶ à 1,8.10⁶ g/mol.

7. Vitrage selon l'une des revendications précédentes, **caractérisé en ce que** la couche hydrophile a une épaisseur comprise entre 0,1 et 250 µm, de préférence 1 et 100 µm, et de manière particulièrement préférée 3 et 50 µm.

8. Vitrage selon l'une des revendications précédentes, **caractérisé en ce que** la couche hydrophile est reliée à un substrat verrier avec interposition d'un primaire d'adhésion qui contient au moins un aminosilane.

9. Procédé de fabrication d'un vitrage comprenant une couche hydrophile selon l'une des revendications précédentes, dans lequel
a) une solution contenant au moins un isocyanate, un polyol et une bisurée à fonction polyol, de la polyvinylpyrrolidone, un agent filmogène et un solvant, est déposée sur un substrat verrier,
b) le vitrage contenant le substrat et la solution déposée est séché, et
c) soumis à une température comprise entre 100 et 150 °C.

10. Procédé selon la revendication 9, **caractérisé en ce que** les fonctions hydroxy de la bisurée représentent 1 à 25, de préférence 3 à 22 % molaires des fonctions hydroxy de la totalité des polyols.

11. Procédé selon la revendication 9, **caractérisé en ce que** l'isocyanate est choisi parmi l'hexaméthylène-1,6-diisocyanate, un oligomère ou un homopolymère de celui-ci, et un diisocyanate aliphatique cyclique, seuls ou en mélange de plusieurs d'entre eux.

12. Procédé selon la revendication 9, **caractérisé en ce que** le polyol est choisi parmi les polyéthylène glycol, polypropylène éther polyol et 1,4-butanediol, seuls ou en mélange de plusieurs d'entre eux.

13. Procédé selon la revendication 9, **caractérisé en ce que** la solution contient un catalyseur, de préférence le dilaurate de dibutylétain.

14. Procédé selon la revendication 9, **caractérisé en ce que** la solution présente un rapport molaire [NCO] /[OH] compris entre 0,7 et 1,3, de préférence 0,8 et 1,15.

15. Utilisation d'un vitrage comprenant une couche hydrophile selon l'une des revendications 1 à 8, pour un véhicule de transport terrestre, aérien et aquatique, notamment pour un véhicule électrique ou autre véhicule à moteur, par exemple comme pare-brise, lunette arrière, vitrage latéral ou vitrage de toit, pour le bâtiment, l'aménagement intérieur, les miroirs, l'électroménager, le mobilier urbain, en particulier dans le but de réduire la condensation d'humidité sur le vitrage.

## Patentansprüche

1. Verglasung umfassend eine hydrophile Schicht mit Polyurethan-Netzwerk, die mindestens eine der Verbindungen Bisharnstoff 1 bzw. Bisharnstoff 4 bzw. Bisharnstoff 5 einschließt, die einesteils aus Toluol-2,4-diisocyanat (TDI), andernteils aus Amino-2-propanol bzw. 6-Amino-1-hexanol bzw. 2-Amino-1-butanol erhalten werden.

2. Verglasung nach Anspruch 1, **dadurch gekennzeichnet, dass** die hydrophile Schicht Polyvinylpyrrolidon enthält.

3. Verglasung nach einem der vorhergehenden Ansprüche, **dadurch gekennzeichnet, dass** die hydrophile Schicht einen Filmbildner enthält.

4. Verglasung nach Anspruch 3, **dadurch gekennzeichnet, dass** der Filmbildner mindestens ein, bevorzugt durch ein insbesondere hydroxyfunktionelles Polyester modifiziertes, Polydimethylsiloxan enthält.

5. Verglasung nach Anspruch 3 oder 4, **dadurch gekennzeichnet, dass** die hydrophile Schicht mindestens 75 bis 99 Gew.-% Polyurethan, 1 bis 15 Gew.-% Polyvinylpyrrolidon und 0,01 bis 3 Gew.-% Filmbildner enthält.

6. Verglasung nach einem der Ansprüche 2 bis 5, **dadurch gekennzeichnet, dass** das Gewichtsmittel des Molekulargewichts von Polyvinylpyrrolidon 1,1.10⁶ bis 1,8.10⁶ g/mol beträgt.

7. Verglasung nach einem der vorhergehenden Ansprüche, **dadurch gekennzeichnet, dass** die hydrophile Schicht eine Stärke von 0,1 bis 250 µm, bevorzugt 1 bis 100 µm, und besonders bevorzugt 3 bis 50 µm aufweist.

8. Verglasung nach einem der vorhergehenden Ansprüche, **dadurch gekennzeichnet, dass** die hydrophile Schicht mit einem Glassubstrat unter Zwischenlage eines Haftprimers verbunden ist, der mindestens ein Aminosilan enthält.

9. Herstellungsverfahren einer Verglasung, umfassend eine hydrophile Schicht nach einem der vorhergehenden Ansprüche, wobei
a) eine Lösung, die mindestens ein Isocyanat, ein Polyol und einen polyolfunktionellen Bisharnstoff, Polyvinylpyrrolidon, einen Filmbildner und ein Lösungsmittel enthält, auf ein Glassubstrat aufgetragen wird,
b) wobei die Verglasung, die das Substrat und die aufgetragene Lösung enthält, getrocknet und
c) einer Temperatur von 100 bis 150 °C unterzogen wird.

10. Verfahren nach Anspruch 9, **dadurch gekennzeichnet, dass** die Hydroxyfunktionen des Bisharnstoffs 1 bis 25, bevorzugt 3 bis 22 Mol.-%, der Hydroxyfunktionen aller Polyole darstellen.

11. Verfahren nach Anspruch 9, **dadurch gekennzeichnet, dass** das Isocyanat ausgewählt ist aus Hexamethylen-1,6-diisocyanat, einem Oligomer oder einem Homopolymer desselben, und einem cyclischen aliphatischen Diisocyanat, allein oder als Gemisch mehrerer von ihnen.

12. Verfahren nach Anspruch 9, **dadurch gekennzeichnet, dass** das Polyol ausgewählt ist aus Polyethylenglycol, Polypropylenetherpolyol und 1,4-Butandiol, allein oder als Gemisch mehrerer von ihnen.

13. Verfahren nach Anspruch 9, **dadurch gekennzeichnet, dass** die Lösung einen Katalysator enthält, bevorzugt Dibutylzinndilaurat.

14. Verfahren nach Anspruch 9, **dadurch gekennzeichnet, dass** die Lösung ein Molverhältnis [NCO] /[OH] von 0,7 bis 1,3, bevorzugt 0,8 bis 1,15, aufweist.

15. Verwendung einer Verglasung umfassend eine hydrophile Schicht nach einem der Ansprüche 1 bis 8 für ein Land-, Luft- und Wassertransportfahrzeug, insbesondere für ein elektrisches Fahrzeug oder anderes Motorfahrzeug, zum Beispiel als Windschutzscheibe, Heckscheibe, Seitenverglasung oder Dachverglasung, für Gebäude, Innenausstattung, Spiegel, Elektrogeräte, Straßeneinbauten, insbesondere, um die Feuchtigkeitskondensierung auf der Verglasung zu reduzieren.

## Claims

1. A glazing unit comprising a hydrophilic layer comprising a polyurethane network incorporating at least one of the compounds bis-urea 1, respectively bis-urea 4, respectively bis-urea 5 obtained from toluene-2,4-diisocyanate (TDI) on the one hand, 2-aminopropanol, respectively 6-amino-1-hexanol, respectively 2-amino-1-butanol and on the other hand.

2. The glazing unit as claimed in claim 1, **characterized in that** the hydrophilic layer contains polyvinylpyrrolidone.

3. The glazing unit as claimed in one of the preceding claims, **characterized in that** the hydrophilic layer contains a film-forming agent.

4. The glazing unit as claimed in claim 3, **characterized in that** the film-forming agent contains at least one polydimethylsiloxane, preferably modified with a polyester, in particular comprising a hydroxyl function.

5. The glazing unit as claimed in claim 3 or 4, **characterized in that** the hydrophilic layer contains at least 75% to 99% by weight of polyurethane, 1% to 15% by weight of polyvinylpyrrolidone, and 0.01% to 3% by weight of film-forming agent.

6. The glazing unit as claimed in one of claims 2 to 5, **characterized in that** the weight-average molecular weight of the polyvinylpyrrolidone is from 1.1 × 10⁶ to 1.8 × 10⁶ g/mol.

7. The glazing unit as claimed in one of the preceding claims, **characterized in that** the hydrophilic layer has a thickness of between 0.1 and 250 µm, preferably 1 and 100 µm, and particularly preferably 3 and 50 µm.

8. The glazing unit as claimed in one of the preceding claims, **characterized in that** the hydrophilic layer is connected to a glass substrate with interposition of an adhesion primer which contains at least one aminosilane.

9. A process for manufacturing a glazing unit comprising a hydrophilic layer as claimed in one of the preceding claims, wherein:
a) a solution containing at least one isocyanate, one polyol and one bis-urea comprising a polyol function, polyvinylpyrrolidone, a film-forming agent and a solvent is deposited on a glass substrate,
b) the glazing unit containing the substrate and the deposited solution is dried, and
c) subjected to a temperature of between 100 and 150°C.

10. The process as claimed in claim 9, **characterized in that** the hydroxyl functions of the bis-urea represent 1 to 25, preferably 3 to 22 mol% of the hydroxyl functions of all the polyols.

11. The process as claimed in claim 9, **characterized in that** the isocyanate is chosen from hexamethylene-1,6-diisocyanate, an oligomer or a homopolymer thereof, and a cyclic aliphatic diisocyanate, alone or as a mixture of several of them.

12. The process as claimed in claim 9, **characterized in that** the polyol is chosen from polyethylene glycols, polypropylene ether polyol and 1,4-butanediol, alone or as a mixture of several of them.

13. The process as claimed in claim 9, **characterized in that** the solution contains a catalyst, preferably dibutyltin dilaurate.

14. The process as claimed in claim 9, **characterized in that** the solution has an [NCO]/[OH] molar ratio of between 0.7 and 1.3, preferably 0.8 and 1.15.

15. The use of a glazing unit comprising a hydrophilic layer as claimed in one of claims 1 to 8, for a terrestrial, airborne or aquatic transportation vehicle, in particular for an electric vehicle or other motor vehicle, for example as a windshield, rear window, side glazing unit or roof glazing unit, for construction, interior fittings, mirrors, electrical goods and street furniture, in particular with the aim of reducing the condensation of moisture on the glazing unit.
